# EUROPÄISCHE PATENTANMELDUNG

(11) **EP 0 940 408 A1**
(43) Veröffentlichungstag der Anmeldung: **08.09.1999**
(21) Anmeldenummer: 99103231.9
(22) Anmeldetag: 19.02.1999
(51) Int. Cl.: C07F 17/00

(54) **Metallorganische Verbindungen**

(30) Priorität: 04.03.1998 DE 19809159
(71) Anmelder: Bayer Aktiengesellschaft, 51368 Leverkusen (DE)
(72) Erfinder: Lang, Heinrich Prof. Dr., 09125 Chemnitz-Harthau (DE); Weiss, Thomas, 68259 Mannheim-Feudenheim (DE); Becke, Sigurd Dr., 51503 Rösrath (DE)

(57) **Zusammenfassung**

Metallorganische Verbindungen von Übergangsmetallen mit gegebenenfalls tetrahydriertem 2-Indenyl als erstem Liganden der Formel 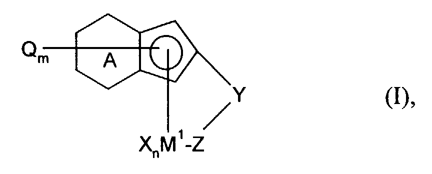 in der A das Benzosystem oder das Tetrahydrocyclohexylsystem bedeutet und die weiteren Formelzeichen den in der Beschreibung genannten Bedeutungsumfang haben, werden durch Umsetzung von 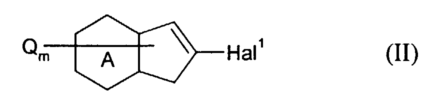 mit Mg bzw. Zn und mit einem Dihalogenid Hal²-Y-Hal³ (III) zu den neuen Zwischenprodukten 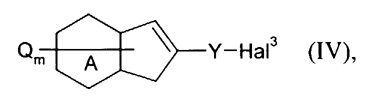 weiterer Umsetzung mit ZM²ₚ (Va) oder ZR⁹ₚ (Vb) zu 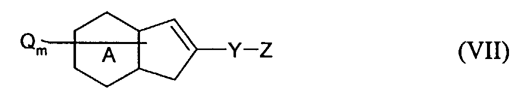 und weiterer Umsetzung mit einer Übergangsmetallverbindung der Formel M¹X_{q} (VIII) hergestellt.

Viele Verbindungen (I) sind nicht C2-symmetrisch.

Die Verbindungen (I) können als Katalysatoren zur (Co)Polymerisation von Olefinen, Diolefionen und/oder Cycloolefinen verwendet werden.

## Beschreibung

Die vorliegende Erfindung betrifft ein Verfahren zur Herstellung von metallorganischen Verbindungen von Übergangsmetallen mit einem in 2-Position gebundenen Indenyl-Liganden, solche Verbindungen selbst und ihre Verwendung als Katalysatoren zur (Co)Polymerisation von olefinischen und/oder diolefinischen Monomeren. Viele dieser Verbindungen sind nicht C2-symmetrisch.

Der Einsatz von metallorganischen Verbindungen mit zwei Liganden, die das Cyclopentadienylanion darstellen oder enthalten, als Katalysatoren zur Polymerisation olefinischer und/oder diolefinscher Verbindungen ist bereits bekannt (Sandwich-Metallocene, siehe EP 35 242, EP 69 951, EP 129 368, EP 277 003, EP 277 004).

Es ist auch bekannt, metallorganische Verbindungen mit nur einem Cyclopentadienylanion als Katalysatoren einzusetzen (Halbsandwich-Katalysatoren, siehe US 5 132 380, EP 416 815, WO 91/04257, WO 96/13529). Halbsandwich-Verbindungen mit einem in 2-Position verbrückten Indenyl-Liganden sind bisher nicht bekannt.

Biscyclopentadienyl-Metallkomplexe, die eine Verbrückung zwischen den beiden Cyclopentadienyl-Liganden aufweisen, werden als ansa-Metallocene bezeichnet. Zu den speziellen Metallocenen gehören die in 1-Position am Indenyl-Liganden verbrückten Bisindenyl-metallocene. Solche chiralen ansa-Metallocen-Derivate eignen sich besonders gut als Katalysatoren zur Herstellung von Olefinpolymeren mit hoher Isotaktizität, enger Molmassenverteilung und hoher Molmasse, wie beispielsweise in EP 485 821 und EP 485 823 beschrieben ist.

Über Metallocene mit in 2-Position verbrückten Indenyl-Liganden ist vergleichsweise wenig bekannt. In Organometallics 1997, 16, 3044-3050 wird ein ansa-Bis-indenyl-Hafniumkomplex beschrieben, wobei einer der Indenyl-Liganden in 2-Position verbrückt ist (Dimethylsilyl-(1-indenyl)(2-indenyl)-bis-dimethylamidohafnium, weitere Umsetzung zu Dimethylsilyl-(1-indenyl)(2-indenyl)-dimethylhafnium). Der Metallkomplex entsteht als Nebenprodukt in geringer Ausbeute in einem speziellen Prozeß (Vakuum, 160°C) und muß in einem aufwendigen Verfahren gereinigt werden. In Organometallics 1993, 12, 5012-5015 wird ein mehrstufiger Syntheseweg zu Ethylenbis(2-indenyl)-titandichlorid beschrieben. Aufgrund der vielstufigen Synthese und der zahlreichen Reinigungsoperationen ist die erzielbare Ausbeute sehr gering. Bedingt durch den Syntheseweg ist die Strakturvielfalt auf Ethylen-verbrückte Liganden eingeschränkt. Aus WO 94/11 406 sind metallorganische Verbindungen von Übergangsmetallen bekannt, die einen Indenyl- und einen Cyclopentadienyl-Liganden aufweisen, wobei der Indenyl-Ligand in der 2-Position substituiert ist; dieser Substituent kann auch als Brücke zum 2. Liganden ausgebildet sein. Die Ausführungsbeispiele zeigen vielstufige Herstellungen mit äußerst unbefriedigenden Ausbeuten, die bei verbrückten Verbindungen Zu 1-Cyclopentadienyl-2-(2-indenyl)-ethan-zirkoniumchlorid, zu Bis-(2-indenyl)-methan-zirkoniumdichlorid oder zu Dimethyl-bis-(2-indenyl)-silan-zirkoniumdichlorid, welches noch Verunreinigungen enthält, führen. In EP 372 414 sind die beiden Verbindungen Ethylen-1-(3-but-3-enyl)inden-1-yl)-2-((1-but-3-enyl)-inden-2-yl)zirkoniumdichlorid und Ethylen-1-((3-allyldimethylsilyl)-inden-1-yl)-2-((1-allyldimethylsilyl)-inden-2-yl)zirkoniumdichlorid genannt.

Aufgrund der schlechten Verfügbarkeit von metallorganischen Verbindungen von Übergangsmetallen mit einem in 2-Position verbrückten Indenyl-Liganden ist über deren Anwendung bzw. deren katalytische Aktivität wenig bekannt.

Es hat sich nun gezeigt, daß solche metallorganische Katalysatoren, deren Verbrückung an der 2-Position mindestens eines Indenylanions ansetzt, besondere Eigenschaften als Polymerisationskatalysatoren haben; sie erzeugen nämlich bei der (Co)Polymerisation von α-Olefinen weitgehend ataktische Polymere mit hohen Molgewichten. Es war daher wünschenswert, ein Herstellungsverfahren für solche in der 2-Position mindestens eines Indenylanions verbrückte Katalysatoren zu finden.

Die vorliegende Erfindung betrifft ein Verfahren zur Herstellung von metallorganisehen Verbindungen von Übergangsmetallen mit gegebenenfalls tetrahydriertem 2-Indenyl als erstem Liganden der Formel 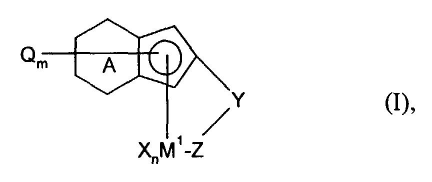 worin
- A: das Benzosystem oder das Tetrahydrocyclohexylsystem bedeutet,
- Q: als Substituent des gegebenenfalls tetrahydrierten 2-Indenylsystems C₁-C₄-Alkyl, C₆-C₁₄-Aryl, C₇-C₁₀-Aralkyl, C₁-C₄-Alkoxy, C₁-C₄-Alkylthio, Phenoxy, Phenylthio, Di-C₁-C₄-alkyl-amino, C₆-C₁₄-Aryl-C₁-C₄-alkyl-amino, Di-C₆-C₁₄-aryl-amino, Dibenzylamino, Tri-C₁-C₄-alkyl-silyl, Di-C₁-C₄-alkyl-boranyl, Phenyl-C₁-C₄-alkyl-boranyl, Diphenylboranyl, Di-C₁-C₄-alkyl-phosphoryl, Diphenylphosphoryl oder Phenyl-C₁-C₄-alkyl-phosphoryl bedeutet,
- m: eine ganze Zahl im Bereich von Null bis Sechs ist,
- M¹: ein Übergangsmetall aus der IV., V. oder VI. Nebengruppe des Periodensystems der Elemente (Mendelejew) ist,
- X: ein Anion bedeutet,
- n: eine Zahl von Null bis Vier ist, die sich aus der Valenz und dem Bindungszustand von M¹ ergibt,
- Y: eine Brücke aus der Gruppe von -C(R¹R²)-, -Si(R¹R²)-, -Ge(R¹R²)-, -C(R¹R²)-C(R³R⁴)-, -C(R¹R²)-Si(R³R⁴)- oder -Si(R¹R²)-Si(R³R⁴)- darstellt, worin R¹, R², R³ und R⁴ unabhängig voneinander Wasserstoff, Halogen, geradkettiges oder verzweigtes C₁-C₁₀-Alkyl, C₅-C₈-Cycloalkyl, C₆-C₁₄-Aryl oder C₇-C₁₀-Aralkyl bedeuten, und
- Z: ein zweiter Ligand aus der Gruppe von offenkettigen und cyclischen, gegebenenfalls anionischen π-Systemen, -N(R⁵)-, -P(R⁶)-, |N(R⁵R⁷)-, |P(R⁶R⁸)-, -O-, -S-, |OR⁵- oder |SR⁵- ist, wobei der senkrechte Strich links vom Elementsymbol N, P, O bzw. S ein Elektronenpaar bedeutet und die Bindung zwischen Z und M¹ ionischen, kovalenten oder koordinativen Charakter hat und worin R⁵, R⁶, R⁷ und R⁸ unabhängig voneinander den Bedeutungsumfang von R¹ bis R⁴ haben und R⁵ und R⁷ zusätzlich -Si(R¹R²R³) bedeuten können und R⁶ und R⁸ zusätzlich -Si(R¹R²R³), -OR¹, -SR¹ oder -N(R¹R²) bedeuten können,
das dadurch gekennzeichnet ist, daß man ein gegebenenfalls substituiertes 2-Halogen-inden der Formel 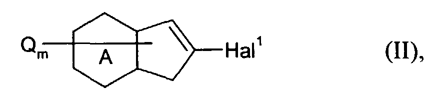 in der Hal¹ für Cl, Br oder I steht und A, Q und m die obige Bedeutung haben,
bei einer Temperatur von -20°C bis +120°C mit elementarem Mg oder Zn in einer Menge von 1 - 100 g-Atom Mg bzw. Zn pro Mol (II) und nach Abtrennung von nicht umgesetztem Mg bzw. Zn mit einem Dihalogenid der Brücke Y der Formel

Hal² - Y - Hal³ (III),

in der
- Hal² und Hal³: unabhängig voneinander Cl, Br oder I bedeuten und
- Y: den obigen Bedeutungsumfang hat,
in einer Menge von 1 - 20 Mol (III) pro Mol (II) unter Austritt von MgHal¹Hal² bzw. ZnHal¹Hal² umsetzt, wobei in dem Fall, daß Y die Bedeutung -Si(R¹R²)-, -Ge(R¹R²)- oder -Si(R¹R²)-Si(R³R⁴)- hat, die Umsetzung von (II) mit (i) Mg bzw. Zn und (ii) mit (III) auch simultan erfolgen kann, und das Reaktionsprodukt der Formel 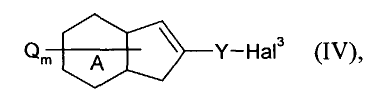 worin A, Q, m, Y und Hal³ die obige Bedeutung haben,
gegebenenfalls nach seiner Isolierung mit einem Z-Derivat der Formel

ZM²ₚ (Va)

oder

ZR⁹ₚ (Vb),

in welcher
- M²: für Li, Na, K oder -MgHal⁴, worin Hal⁴ den Bedeutungsumfang von Hal² hat, steht,
- p: die Zahl Eins oder Zwei darstellt,
- R⁹: Wasserstoff, -Si(R¹R²R³) oder Sn(R¹R²R³) darstellt und
- Z, R¹, R² und R³: die obige Bedeutung haben,
unter Austritt einer Verbindung der Formel

M²Hal³ (VIa)

bzw.

R⁹Hal³ (VIb),

in welcher M², R⁹ und Hal³ die obige Bedeutung haben,
gegebenenfalls in Gegenwart einer Hilfsbase zur 2-Indenyl-Verbindung der Formel 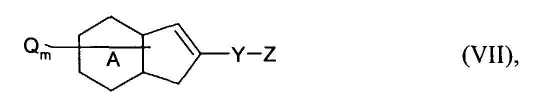 in der A, Q, m, Y und Z die obige Bedeutung haben und die als Dianion vorliegen kann und in der Z weiterhin M², R⁹ oder ein Elektronenpaar tragen kann,
und dann weiter mit einer Übergangsmetallverbindung der Formel

M¹X_{q} (VIII),

umsetzt, in der
- M¹ und X: die obige Bedeutung haben und
- q: eine Zahl von Zwei bis Sechs ist, die sich aus der Oxidationsstufe von M¹ ergibt.

Die Erfindung betrifft weiterhin die mit dem genannten Verfahren herstellbaren metallorganischen Verbindungen von Übergangsmetallen mit gegebenenfalls tetrahydriertem 2-Indenyl als erstem Liganden der Formel 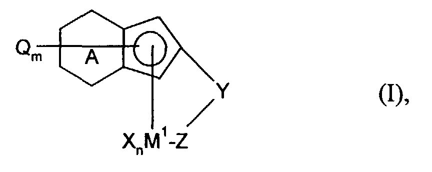 worin
- A: das Benzosystem oder das Tetrahydrocyclohexylsystem bedeutet,
- Q: als Substituent des gegebenenfalls tetrahydrierten 2-Indenylsystems C₁-C₄-Alkyl, C₆-C₁₄-Aryl, C₇-C₁₀-Aralkyl, C₁-C₄-Alkoxy, C₁-C₄-Alkylthio, Phenoxy, Phenylthio, Di-C₁-C₄-alkyl-amino, C₆-C₁₄-Aryl-C₁-C₄-alkyl-amino, Di-C₆-C₁₄-aryl-amino, Dibenzylamino, Tri-C₁-C₄-alkyl-silyl, Di-C₁-C₄-alkyl-boranyl, Phenyl-C₁-C₄-alkyl-boranyl, Diphenylboranyl, Di-C₁-C₄-alkyl-phosphoryl, Diphenylphosphoryl oder Phenyl-C₁-C₄-alkyl-phosphoryl bedeutet,
- m: eine ganze Zahl im Bereich von Null bis Sechs ist,
- M¹: ein Übergangsmetall aus der IV., V. oder VI. Nebengruppe des Periodensystems der Elemente (Mendelejew) ist,
- X: ein Anion bedeutet,
- n: eine Zahl von Null bis Vier ist, die sich aus der Valenz und dem Bindungszustand von M¹ ergibt,
- Y: eine Brücke aus der Gruppe von -C(R¹R²)-, -Si(R¹R²)-, -Ge(R¹R²)-, -C(R¹R²)-C(R³R⁴)-, -C(R¹R²)-Si(R³R⁴)- oder -Si(R¹R²)-Si(R³R⁴)- darstellt, worin R¹, R², R³ und R⁴ unabhängig voneinander Wasserstoff, Halogen, geradkettiges oder verzweigtes C₁-C₁₀-Alkyl, C₅-C₈-Cycloalkyl, C₆-C₁₄-Aryl oder C₇-C₁₀-Aralkyl bedeuten, und
- Z: ein zweiter Ligand aus der Gruppe von offenkettigen und cyclischen, gegebenenfalls anionischen π-Systemen, -N(R⁵)-, -P(R⁶)-, |N(R⁵R⁷)-, |P(R⁶R⁸)-, -O-, -S-, |OR⁵- oder |SR⁵- ist, wobei der senkrechte Strich links vom Elementsymbol N, P, O bzw. S ein Elektronenpaar bedeutet und die Bindung zwischen Z und M¹ ionischen, kovalenten oder koordinativen Charakter hat und worin R⁵, R⁶, R⁷ und R⁸ unabhängig voneinander den Bedeutungsumfang von R¹ bis R⁴ haben und R⁵ und R⁷ zusätzlich -Si(R¹R²R³) bedeuten können und R⁶ und R⁸ zusätzlich -Si(R¹R²R³), -OR¹, -SR¹ oder -N(R¹R²) bedeuten können, wobei die Verbindungen Ethylen-bis(2-indenyl)-titandichlorid, Dimethylsilyl-(1-indenyl)(2-indenyl)-bis-dimethylamino-hafnium, Dimethylsilyl-(1-indenyl)(2-indenyl)-dimethylhafnium, Dimethyl-bis(2-indenyl)-silan-zirkoniumdichlorid, 1-Cyclopentadienyl-2-(2-indenyl)-ethan-zirkoniumchlorid, Bis-(2-indenyl)-methan-zirkoniumdichlorid, Ethylen-1-(3-but-3-enyl)inden-1-yl)-2-((1-but-3-enyl)-inden-2yl)zirkoniumdichlorid und Ethylen-1-((3-allyldimethylsilyl)-inden-1-yl)-2-((1-allyldimethylsilyl)-inden-2-yl)zirkoniumdichlorid ausgenommen sind.

Das erfindungsgemäße Verfahren ist gekennzeichnet durch eine Reaktionsfolge über das Zwischenprodukt der obigen Formel (IV). Solche Zwischenprodukte sind bislang nicht bekannt. Die Erfindung betrifft daher weiter diese Zwischenprodukte.

Die Erfindung betrifft noch weiter ein Verfahren zur Herstellung der Zwischenprodukte der Formel (IV), das dadurch gekennzeichnet ist, daß man ein gegebenenfalls substituiertes 2-Halogeninden der Formel 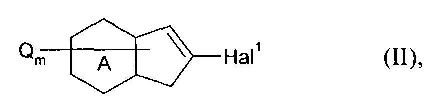 in der
- Hal¹, A, Q und m: die obige Bedeutung haben,
bei einer Temperatur von -20°C bis +120°C mit elementarem Mg oder Zn in einer Menge von 1 bis 100 g-Atom Mg bzw. Zn pro Mol (II) und nach Abtrennung von nicht umgesetztem Mg bzw. Zn mit einem Dihalogenid von Y der Formel

Hal²-Y-Hal³ (III),

in der
- Y, Hal² und Hal³: die obige Bedeutung haben,
in einer Menge von 1 bis 20 Mol (III) pro Mol (II) unter Austritt von MgHal¹Hal² bzw. ZnHal¹Hal² umsetzt, wobei in dem Fall, daß Y die Bedeutung -Si(R¹R²)-, -Ge(R¹R²)- oder -Si(R¹R²)-Si(R³R⁴)- hat, die Umsetzung von (II) mit (i) Mg bzw. Zn und (ii) mit (III) auch simultan erfolgen kann.

Die Erfindung betrifft weiterhin die Verwendung der Verbindungen gemaß Formel (I) als Katalysatoren sowohl auf einem Katalysatorträger (z.B. Al₂O₃, SiO₂ und andere inerte) als auch ohne Träger zur Polymerisation von Monomeren aus der Gruppe von C₂-C₆-α-Olefinen, C₄-C₆-Diolefinen und Cyclo(di)olefinen oder zur Copolymerisation mehrerer der genannten Monomeren, insbesondere zur Herstellung amorpher, weitgehend ataktischer Polymerer.

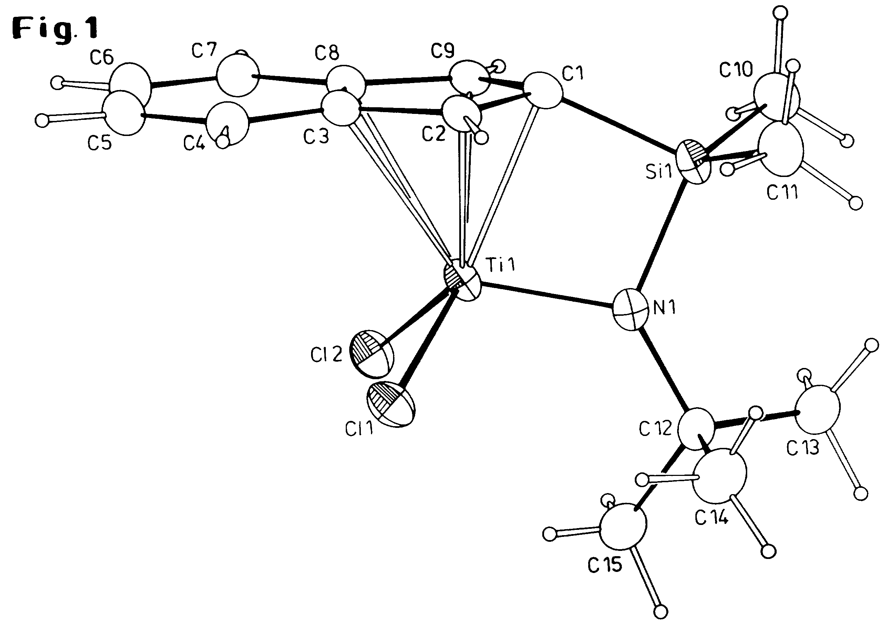

Fig. 1 zeigt den Aufbau einer erfindungsgemäß herstellbaren metallorganischen Verbindung in perspektiver Darstellung, wie sie durch Röntgenstrukturanalyse erhalten wird, am Beispiel der Verbindung tert.-Butylamido-2-indenyl-dimethylsilyl-titandichlorid.

Die Erfindung betrifft in bevorzugter Weise das beschriebene Verfahren und die damit herstellbaren Verbindungen der Formel (I), worin Y die Bedeutung -Si(R¹R²)-, -Ge(R¹R²)- oder -Si(R¹R²)-Si(R³R⁴)-, besonders bevorzugt -Si(R¹R²)- hat und die Umsetzung von (II) mit (i) Mg bzw. Zn und (ii) mit (III) zum Reaktionsprodukt (IV) simultan erfolgt.

Offenkettige und cyclische π-Systeme im Rahmen der Bedeutung von Z sind beispielsweise Butadien, Isopren, Chloropren, substituiertes oder nicht substituiertes Cyclopentadien, substituiertes oder nicht substituiertes 1-Inden, substituiertes oder nicht substituiertes 2-Inden, substituiertes oder nicht substituiertes Fluoren, die mit der Brücke Y kovalent und mit M¹ ionisch, kovalent oder koordinativ gebunden sind. Substituenten der π-Systeme können unabhängig von Q den Bedeutungsumfang von Q annehmen und unabhängig von m ebenfalls m-fach vorliegen. Bevorzugt sind die genannten cyclischen π-Systeme, besonders bevorzugt 2-Indenyl.

Die Erfindung betrifft in bevorzugter Weise das erfindungsgemäße Verfahren und erfindungsgemäße nicht C2-symmetrische metallorganische Verbindungen von Übergangsmetallen der Formel (I), in der jedoch an die Stelle von Z der zweite Ligand Z 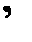 tritt, der die Bedeutung substituiertes oder nicht substituiertes Cyclopentadien, substituiertes oder nicht substituiertes 1-Inden, nicht substituiertes 2-Inden, substituiertes oder nicht substituiertes Fluoren, -N(R⁵)-, -P(R⁶)-, |N(R⁵R⁷)-, |P(R⁶R⁸)-, -O-, -S-, |OR⁵- oder |SR⁵- hat, worin R⁵ bis R⁸ und die senkrechten Striche die obengenannte Bedeutung haben und wobei bei den erfindungsgemäßen Verbindungen der Formel (I) die Verbindungen Ethylen-bis(2-indenyl)-titandichlorid, Dimethylsilyl-(1-indenyl)(2-indenyl)-bis-dimethylamino-hafnium, Dimethylsilyl-(1-indenyl)(2-indenyl)-dimethylhafnium, Dimethyl-bis(2-indenyl)-silan-zirkoniumdichlorid, 1-Cyclopentadienyl-2-(2-indenyl)-ethan-zirkoniumchlorid, Bis-(2-indenyl)-methan-zirkoniumdichlorid, Ethylen-1-(3-but-3-enyl)inden-1-yl)-2-((1-but-3-enyl)-inden-2-yl)zirkoniumdichlorid und Ethylen-1-((3-allyldimethylsilyl)-inden-1-yl)-2-((1-allyldimethylsilyl)-inden-2-yl)zirkoniumdichlorid ausgenommen sind.

Weiter bevorzugte zweite Liganden sind solche mit der Formel Z 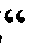 mit dem Bedeutungsumfang von substituiertem oder nicht substituiertem 1-Indenyl, substituiertem oder nicht substituiertem Fluorenyl, substituiertem oder nicht substituiertem Cyclopentadienyl, -N(R⁵)- oder |N(R⁵R⁷)-, insbesondere in Verbindung mit Y = -Si(R¹R²)- und M¹ = Ti oder Zr.

In bevorzugter Weise werden die nicht C2-symmetrischen Verbindungen gemäß Formel (I) zur Herstellung ataktischer Polymerer verwendet. Verbindungen der Formel (I), in denen Y = -Si(R¹R²)-, M¹ = Ti oder Zr und Z = -N(R⁵)- bedeuten, eignen sich insbesondere zur Herstellung von ataktischem Polypropylen.

Im Rahmen der angegebenen Bedeutung von A bedeutet der erste Ligand in (I) 2-Indenyl oder 2-Tetrahydroindenyl, bevorzugt 2-Indenyl.

Geradkettiges oder verzweigtes C₁-C₁₀-Alkyl ist beispielsweise Methyl, Ethyl, Propyl, Isopropyl, Butyl, Isobutyl, tert.-Butyl, die isomeren Pentyle, Hexyle, Octyle oder Decyle. Bevorzugt ist C₁-C₄-Alkyl, besonders bevorzugt sind Methyl und Ethyl.

C₅-C₈-Cycloalkyl ist beispielsweise Cyclopentyl, Methyl-cyclopentyl, Dimethyl-cyclopentyl, Cyclohexyl, Methyl-cyclohexyl, Dimethyl-cyclohexyl, Cycloheptyl, Cyclooctyl, bevorzugt Cyclopentyl und Cyclohexyl und ihre Methyl- und Dimethyl-Derivate.

C₆-C₁₄-Aryl ist beispielsweise Phenyl, Naphthyl, Biphenylyl, Anthryl, Phenanthryl, bevorzugt Phenyl.

C₇-C₁₀-Aralkyl ist beispielsweise Benzyl, α- oder β-Phenyl-ethyl, Phenyl-propyl oder Phenyl-butyl.

C₁-C₄-Alkoxy bzw. C₁-C₄-Alkylthio sind beispielsweise Methoxy, Methylthio, Ethoxy, Ethylthio, Propoxy, Propylthio, Isopropoxy, Isopropylthio, Butoxy, Butylthio, Isobutoxy und Isobutylthio.

Aryl bzw. die aromatischen Anteile von Aralkyl können 1- oder 2-fach, gleich oder unterschiedlich durch Fluor, Chlor, Brom, Methyl, Ethyl, Methoxy oder Ethoxy substituiert sein.

Halogen im Rahmen von R¹ bis R⁸ ist beispielsweise Fluor, Chlor, Brom oder verschiedene von ihnen, bevorzugt Chlor.

M¹ ist beispielsweise Ti, Zr, Hf, V, Nb, Ta, Cr, W, Mo, bevorzugt Ti, Zr, Hf, V, Nb, besonders bevorzugt Ti, Zr, Hf, ganz besonders bevorzugt Ti, Zr. M¹ kann sowohl in der höchstmöglichen Oxidationsstufe als auch in einer davon abweichenden niedrigeren Oxidationsstufe eingesetzt werden und so in den metallorganischen Verbindungen auftreten. In vielen Fällen ist es vorteilhaft, M¹ zunächst in einer niederen Oxidationsstufe einzusetzen und danach mit einem milden Oxidationsmittel, beispielsweise PbCl₂, aufzuoxidieren.

X ist ein einfach oder mehrfach geladenes Anion aus der Gruppe von Chlorid, Bromid, Iodid, C₁-C₄-Carboxylat, Amid, C₁-C₄-Alkyl, Phenyl, Benzyl, Neopentyl und Butadienyl, bevorzugt Chlorid oder Bromid, es können auch verschiedene der genannten Anionen vorliegen.

Hal¹ Hal² und Hal³ im Rahmen von (II) und (III) sind unabhängig voneinander Cl, Br oder I, bevorzugt sind Hal¹ Br und Hal² und Hal³ Cl oder Br.

Die Temperatur zur Umsetzung von (II) mit Mg oder Zn liegt im Bereich von -20°C bis +120°C, bevorzugt 0°C bis +100°C, besonders bevorzugt +25°C bis +80°C.

Die Menge Mg bzw. Zn beträgt 1 bis 100 g-Atom pro Mol (II). Grundsätzlich kann auch mit Mengen außerhalb des genannten Bereiches gearbeitet werden. Unterhalb von 1 g-Atom Mg bzw. Zn pro Mol (II) ist die Umsetzung von (II) unvollständig und oberhalb von 100 g-Atom ist kein weiterer Vorteil bezuglich Vollständigkeit und Geschwindigkeit der Umsetzung zu erwarten. In bevorzugter Weise werden 1 bis 10 g-Atom Mg bzw. Zn, in besonders bevorzugter Weise 1 bis 5 g-Atom Mg bzw. Zn pro Mol (II) eingesetzt. Von den Metallen Mg und Zn ist Mg zur Umsetzung bevorzugt.

Die Temperatur zur weiteren Umsetzung mit (III) liegt ebenfalls im Bereich von -20°C bis +120°C, bevorzugt 0°C bis +100°C, besonders bevorzugt +25°C bis +80°C.

Die Menge von (III) beträgt 1 bis 20 Mol pro Mol (II). In Mengen außerhalb dieses Bereiches gilt das oben zur Menge an Mg bzw. Zn Gesagte. In bevorzugter Weise werden 1 bis 10 Mol (III), in besonders bevorzugter Weise 1 bis 2 Mol (III) pro Mol (II) eingesetzt.

Nicht umgesetztes Mg bzw. Zn und (III) werden auf fachmännisch bekannte Weise vom Reaktionsansatz abgetrennt und können erneut eingesetzt werden.

Das erfindungsgemäße Verfahren kann in Gegenwart eines polaren, aprotischen Lösungsmittels durchgeführt werden. Geeignete Lösungsmittels sind beispielsweise Methylenchlorid, Chloroform, Dimethylformamid, N-Methyl-pyrrolidon und Ether; hiervon sind die Ether bevorzugt, beispielsweise Diethylether, Diisopropylether, Dioxan, Tetrahydrofuran und andere dem Fachmann bekannte. Die Menge Lösungsmittel wird so gewählt, daß (II) und die daraus entstehende Mg-organische bzw. Zn-organische Verbindung gelöst vorliegen und das nicht umgesetzte Mg bzw. Zn etwa durch Filtration oder Dekantieren oder analoge Trennoperation abgetrennt werden kann. Diese Menge beträgt beispielsweise 50 bis 100 % der Menge von (II).

Y ist in bevorzugter Weise -C(R¹R²)-, Si(R¹R²)-, besonders bevorzugt -Si(R¹R²)-.

Für den Fall, daß Y die Bedeutung -Si(R¹R²)-, -Ge(R¹R²)- oder -Si(R¹R²)-Si(R³R⁴)-hat, eröffnet die simultane Umsetzung von (II) mit (i) Mg bzw. Zn und (ii) mit (III) eine elegante Möglichkeit der Einsparung eines Reaktionsschrittes.

Für den Fall, daß die Umsetzung von (IV) mit (Va) oder (Vb) zu (VII) in Gegenwart einer Hilfsbase durchgeführt wird, kommen hierfür beispielsweise in Betracht: Offenkettige oder cyclische tertiäre aliphatische Amine mit insgesamt 3 bis 30 C-Atomen, wie Trimethylamin, Triethylamin, Tripropylamin, Triisopropylamin, Tributylamin, Triisobutylamin, Trihexylamin, Trioctylamin, Tridecylamin, N-Methyl-piperidin, N,N 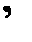 -Dimethyl-piperazin, Diaza-bicyclo-nonan (DBN), Diaza-bicyclo-octan (DABCO), Diazabicyclo-undecan (DBU), auch Amine mit unterschiedlich langen C-Ketten, wie N,N-Dimethyl-butylamin, N,N-Dimethyl-octylamin, N,N-Dimethyl-stearylamin und ähnliche, und aromatische Amine, wie Pyridin, Methylpyridine, Chinolin, N,N-Dimethyl-anilin und ähnliche.

Die Aufarbeitung des die metallorganische Verbindung (I) enthaltenden Reaktionsgemisches erfolgt mit fachmännisch bekannten Operationen, wie Filtration, Abdestillieren flüchtiger Gemischanteile, Chromatographie und Kristallisation.

Die metallorganischen Verbindungen der Formel (I) können als Katalysatoren zur (Co)Polymerisation von C₂-C₆-α-Olefinen, C₄-C₆-Diolefinen, Cyclo(di)olefinen oder Gemischen mehrerer von ihnen verwendet werden. Monomere der genannten Gruppen sind beispielsweise: Ethylen, Propylen, Butylen, Penten, Hexen und deren verzweigte Isomere, 1,3-Butadien, 1,3- oder 1,4-Pentadien, 1,3-, 1,4- oder 1,5-Hexadien, Isopren, Chloropren, Norbornen, Ethyliden-norbornen und Vinyl-norbornen.

Die Verbindungen der Formel (I) werden zur (Co)Polymerisation häufig in Kombination mit Cokatalysatoren eingesetzt.

Als Cokatalysatoren kommen die auf dem Gebiet der Metallocene bekannten Cokatalysatoren in Frage, wie polymere oder oligomere Alumoxane, Lewissäuren sowie Aluminate und Borate. In diesem Zusammenhang wird insbesondere verwiesen auf Macromol. Symp. Vol. 97, Juli 1995, S. 1 - 246 (für Alumoxane), sowie auf EP 277 003, EP 277 004, Organometallics 1997, 16, 842-857 (für Borate) und EP 573 403 (für Aluminate).

Insbesondere eignen sich als Cokatalysatoren Methylalumoxan, durch Triisobutylaluminium (TIBA) modifiziertes Methylalumoxan, sowie Diisobutylalumoxan, Trialkylaluminiumverbindungen, wie Trimethylaluminium, Triethylaluminium, Triisobutylaluminium, Triisooctylaluminium, darüber hinaus Dialkylaluminium-Verbindungen wie Diisobutylaluminiumhydrid, Diethylaluminiumchlorid, substituierte Triarylborverbindungen, wie Tris(pentafluorphenyl)boran, sowie ionische Verbindungen, die als Anion Tetrakis(pentafluorphenyl)borat enthalten, wie Triphenylmethyltetrakis(pentafluorphenyl)borat, Trimethylammoniumtetrakis(pentafluorphenyl)borat, N,N-Dimethylaniliniumtetrakis(pentafluorphenyl)borat, substituierte Triarylaluminiumverbindungen, wie Tris(pentafluorphenyl)aluminium, sowie ionische Verbindungen, die als Anion Tetrakis(pentafluor-phenyl)aluminat enthalten, wie Triphenylmethyltetrakis(pentafluorphenyl)aluminat, N,N-Dimethylaniliniumtetrakis(pentafluorphenyl)aluminat.

Selbstverständlich ist es möglich, die Cokatalysatoren im Gemisch untereinander einzusetzen. Die jeweils günstigsten Mischungsverhältnisse sind durch geeignete Vorversuche zu bestimmen.

Solche (Co)Polymerisationen werden in der Gas-, Flüssig- oder Slurryphase ausgeführt. Der Temperaturbereich hierzu reicht von -20°C bis +200°C, bevorzugt 0°C bis 160°C, besonders bevorzugt +20°C bis +80°C; der Druckbereich reicht von 1 bis 50 bar, bevorzugt 3 bis 30 bar. Mitverwendete Lösungsmittel sind beispielsweise: gesättigte Aliphaten oder (Halogen)Aromaten wie Pentan, Hexan Heptan, Cyclohexan, Petrolether, Petroleum, hydrierte Benzine, Benzol, Toluol, Xylol, Ethylbenzol, Chlorbenzol und analoge. Diese Reaktionsbedingungen zur (Co)Polymerisation sind dem Fachmann grundsätzlich bekannt.

Wichtige Polymere, die mit den erfindungsgemäßen metallorganischen Verbindungen als Katalysatoren hergestellt werden können, sind solche des Propylens und Copolymere hiervon. Als Comonomere geeignet sind C₂- bis C₁₀-Alkene, wie Ethylen, 1-Buten, 1-Penten, 1-Hexen, 1-Octen, Isobutylen und Arylalkene, wie z.B. Styrol, Ebenfalls geeignete Comonomere sind konjugierte Diene, wie 1,3-Butadien, Isopren, 1,3-Pentadien, und nichtkonjugierte Diene, wie 1,4-Hexadien, 1,5-Heptadien, 5,7-Dimethyl- 1,6-octadien, 4-Vinyl-1-cyclohexen, 5-Ethyliden-2-norbornen, 5-Vinyl-2-norbornen und Dicyclopentadien.

Die so herstellbaren Propylen(co)polymere besitzen Molekulargewichte mit M_{w} >100 000 g/mol und Molgewichtsverteilungen mit M_{w}/Mₙ<4. Die Propylen(co)polymere haben intrinsische Viskositäten größer 1 dl/g. Die Kristallinitäten sind kleiner als 10 %, wobei % Kristallinität = (Schmelzenthalpie/209 J/g) x 100 und die Schmelzenthalpie in J/g mit der DSC-Methode ermittelt wird. Besonders bevorzugt sind Propylen(co)polymere mit Schmelzenthalpien mit einem Wert von kleiner 5 J/g (DSC-Methode). Die Propylen(co)polymeren sind gut löslich in gängigen Lösungsmitteln, wie Hexan, Heptan, Diethylether oder Toluol.

In der beschriebenen Weise lassen sich insbesondere auch Kautschuke auf Basis von Propylen und einem oder mehreren der genannten Comonomere herstellen. Besonders bevorzugt ist die Copolymerisation von Ethylen und Propylen, wobei amorphe Propylen(co)polymere mit einem Ethylenanteil im Polymeren im Bereich von 1 bis 70 Gew.-%, bevorzugt von 10 bis 65 Gew.-%, erhalten werden.

In der beschriebnen Weise lassen sich auch EPDM-Kautschuke auf Basis von Ethylen, Propylen und einem Dien, vorzugsweise 5-Ethyliden-2-norbornen herstellen. Die EPDM-Kautschuke sind dadurch charakterisiert, daß sie hohe Molekulargewichte und geringe kristalline Anteile aufweisen.

Beispielsweise kann die (Co)polymerisation von Propylen mit oder ohne die genannten Comonomeren wie folgt durchgeführt werden: ein Stahlautoklav wird nach den üblichen Reinigungsoperationen mit einem Lösungsmittel und einem Scavenger, z.B. Triisobutylaluminium befüllt. Durch den Scavenger werden mögliche Verunreinigungen und Katalysatorgifte, z.B. Wasser oder andere sauerstoffhaltigen Verbindungen unschädlich gemacht. Dann wird als Katalysatorvorstufe eine Verbindung der Formel (I) zugegeben. Anschließend wird der Reaktor mit Monomeren bis zu einem bestimmten Druck befüllt, auf eine ausgewählte Temperatur thermostatisiert und die Polymerisation durch Zugabe eines oder mehrerer der zuvor genannten Cokatalysatoren gestartet. Die Polymerisation kann in einem kontinuierlichen oder diskontinuierlichen Prozeß erfolgen.

### Beispiele

Die Erfindung wird anhand der nachstehenden Beispiele näher erläutert.

Allgemeine Angaben: Herstellung und Handhabung organometallischer Verbindungen erfolgten unter Ausschluß von Luft und Feuchtigkeit unter Argon-Schutz (Schlenk-Technik). Alle benötigten Lösungsmittel wurden vor Gebrauch durch mehrstündiges Sieden über einem geeigneten Trockenmittel und anschließende Destillation unter Argon absolutiert. Die Verbindungen wurden mit ¹H-NMR, ¹³C-NMR und Massenspektroskopie charakterisiert.

### Polymercharakterisierung:

Die intrinsische Viskosität wurde in einem Ubbelohde-Kapillarviskosimeter bei 140°C in o-Dichlorbenzol als Lösungsmittel bestimmt (Mehrpunktmessung). Die Molmassenverteilung wurde in einem Gerät mit der Bezeichnung WATERS 150 CV plus Gel Permeation Chromatograph bei 140°C in o-Dichlorbenzol bestimmt. Die DSC-Messungen erfolgten an einem Gerät der Firma Perkin-Elmer mit der Bezeichnung Differential-Scanning-Calorimeter DSC-2 nach folgender Vorschrift: zwei Aufheizungen -90°C bis +180°C, Heizrate 20K/min, schnelle Abkühlung mit 320K/min auf -90°C, Stickstoffspülung, Einwaagen 12,3 mg Probenmasse in Normkapseln. Die Bestimmung der Mooneyviskosität erfolgte nach ASTM 1646 / DIN 53 523. Die IR-spektroskopische Ermittlung der Polymerzusammensetzung erfolgte gemäß ASTM D 3900.

### Beispiel 1

### Herstellung von Chlor-2-indenyldimethylsilan

2-Brominden (4.0 g, 0.02 mol) wurde in 4 ml Tetrahydrofuran gelöst und zu einer Mischung, bestehend aus Magnesium (0.73 g, 0.03 mol) und Dichlordimethylsilan (5.0 g, 0.04 mol) in 4 ml Tetrahydrofuran getropft. Dabei siedete die Lösung gelinde. Nach 15 h Rühren wurden die flüchtigen Bestandteile im Ölpumpenvakuum entfernt und der Rückstand mit 40 ml n-Pentan versetzt. Vom ausgefallenen Magnesiumsalz wurde abgesaugt. Nach Entfernen des Lösungsmittels im Ölpumpenvakuum erhielt man 4.6 g (95 %) Chlor-2-indenyldimethylsilan als farbloses Öl.
^{**1**}**H NMR (CDCl**_{**3**}**):** δ 7.3 - 7.6 (m, 4 H, Ind), 7.29 (s, 1 H, Ind), 3.65 (s, 2 H, CH₂), 0.74 (s, 6 H, SiMe₂).
^{**13**}**C NMR (CDCl**_{**3**}**):** δ 146.4 (C_{Ind}, [C-Si]), 144.6 (C_{Ind}, [C]), 143.2 (CH=CSi), 126.3 (arom. CH, Ind), 125.6 (arom. CH, Ind), 123.70 (arom. CH, Ind), 121.8 (arom. CH, Ind), 41.5 (CH₂), 2.0 (SiMe).

### Beispiel 2

### Herstellung von Cyclopentadienyl-2-indenyl-dimethylsilan

Chlor-2-indenyldimethylsilan (4.6 g, 0.022 mol) aus Beispiel 1 wurde in 20 ml Diethylether gelöst. Es wurde auf 0°C gekühlt und eine Lösung von Cyclopentadienylnatrium (1.94 g, 0.022 mol) in 20 ml Tetrahydrofuran getropft. Man ließ 15 h bei 25°C rühren. Anschließend wurden 50 ml Wasser zugefügt, die organische Phase nochmals mit Wasser gewaschen und über Na₂SO₄ getrocknet. Nach Entfernen der Lösungsmittel im Ölpumpenvakuum wurde das zurückbleibende hellgelbe Öl mittels Säulenchromatographie gereinigt. Nach Entfernen des Lösungsmittels erhielt man 2,4 g (46%) Cyclopentadienyl-2-indenyl-dimethylsilan als farbloses Öl.
^{**1**}**H NMR (CDCl**_{**3**}**):** δ 7.6 - 7.3 (m, 4H, arom. H), 7.01 (s, 1H, Ph-CH=C(SiMe₂Cp)), 6.72 (m, 4H, Cp), 3.56 (s, 2H, CH₂, Ind), {3.67, 3.49, 3.18} (s, 1H, CH-Si, Cp), {0.57, 0.51, 0.26} (s, 6H, Si-(CH₃)₂).
^{**13**}**C NMR (CDCl**_{**3**}**):** δ 146.5 (C), 145.1 (C), 141.8 (Ph-CH=C(SiMe₂Cp)), 137.9 (Ph-C(SiMe₂Cp)=CH), 132.9 (breit, CH, Cp), 130.5 (breit, CH, Cp), 126.2 (CH, Ind.), 124.9 (CH, Ind.), 123.5 (CH, Ind), 120.9 (CH, Ind), 51.1 (breit, CH-Si, Cp), 45.3 (breit, CH-Si, Cp), 42.6 (CH₂, Ind), -3.9 (SiMe).

### Beispiel 3

### Herstellung von Cyclopentadienyl-2-indenyl-dimethylsilylzirkondichlorid

Cyclopentadienyl-2-indenyl-dimethylsilan (1.0 g, 0.0042 mol) aus Beispiel 2 wurde in 10 ml Tetrahydrofuran und 10 ml Diethylether gelöst und bei -40 °C mit einer 2.5 m Lösung von n-BuLi in Hexan (3.5 ml, 0.0084 mol) zur Reaktion gebracht. Man ließ 15 h bei 25°C rühren. Danach wurden die Lösungsmittel im Ölpumpenvakuum entfernt und der Rückstand mit 20 ml Petrolether gewaschen. Das so gereinigte Dilithiumsalz wurde in weiteren 20 ml Petrolether suspendiert. ZrCl₄·2 THF (1.58 g, 0.042 mol) wurde in 20 ml Toluol ebenfalls suspendiert und zum Dilithiumsalz bei 25°C in einer Portion gegeben. Nach 30 min wurde eine gelborange Verfärbung erkennbar, welche sich zunehmend vertiefte. Nach 15 h Rühren wurden die Lösungsmittel im Ölpumpenvakuum entfernt und der Rückstand mit 80 ml Toluol extrahiert und durch Filtration über Kieselgur von unlöslichen Bestandteilen befreit. Das Toluol wurde im Ölpumpenvakkum entfernt. Man erhielt 1.08 g (64 %) Cyclopentadienyl-2-indenyl-dimethylsilylzirkondichlorid als gelborangefarbenen Feststoff.
^{**1**}**H NMR (CDCl**_{**3**}**):** δ 7.63 (dd, 2 H, ²J_{HH} = 3.0, 5.0 Hz, Ind), 7.30 (dd, 2 H, ²J_{HH} 3.0, 5.0 Hz, Ind), 6.90 (pt, 2 H, ²J_{HH} = 0.9 Hz, Cp), 6.16 (s, 2 H, Ind), 6.05 (pt, 2 H, ²J_{HH} 0.9 Hz, Cp), 0.83 (s, 6H, SiMe₂).

### Beispiel 4

### Herstellung einer Lösung von Lithiumfluoren

Fluoren (2.2 g, 0.0136 m) wurde in 40 ml Diethylether gelöst und bei 0°C mit einer 2.5 molaren Lösung von n-BuLi in Hexan (5.5 ml, 0.0136 mol) zur Reaktion gebracht. Nach 4 h Rühren bei 25°C wurde das Volumen der Lösung auf die Hälfte im Ölpumpenvakuum reduziert.

### Beispiel 5

### Herstellung von Fluorenyl-2-indenyl-dimethylsilan

Zu einer Lösung von Chlor-2-indenyldimethylsilan (2.85 g, 0.0136 m) gemäß Beispiel 1 in 20 ml Diethylether wurde bei 0 °C langsam eine Lösung von Lithiumfluoren aus Beispiel 4 mittels Septum und Spritze getropft. Nach 2 h Rühren bei 25 °C wurde vom ausgefallenen LiCl abfiltriert. Das Lösungsmittel wurde vom Filtrat entfernt und der beigefarbene Rückstand in Ether/Petrolether in der Hitze gelöst und bei -30 °C kristallisiert. Man erhielt 3.45 g (75 %) Fluorenyl-2-indenyl-dimethylsilan als farblosen Feststoff. **Schmp.:** 125 °C
^{**1**}**H NMR (CDCl**_{**3**}**):** δ 7.9 - 7.8 (m, 2 H, arom. H), 7.5 - 7.2 (m, 12 H, arom. H), 7.04 (s, 1 H, Ind), 4.10 (s, 1 H, CH, Flu), 3.29 (s, 1 H, CH₂, Ind), 0.20 (s, 6 H, SiMe₂).
^{**13**}**C NMR (CDCl**_{**3**}**):** δ 147.4 (C_{Ind}, [C]), 146.0 (C_{Ind}, [C]), 146.0 (C_{Ind}, [C-Si]), 145.7 (C_{Flu}, [C]), 143.2 (CH=CSi), 141.1 (C_{Flu}, [C]), 126.8 (CH, arom.¹), 126.6 (CH, arom.), 125,9 (CH, arom.), 125.5 (CH, arom.), 124.7 (CH, arom.), 124.2(CH, arom.), 121.6(CH, arom.), 120.5 (CH, arom.), 43.4 (CHSi, Flu), 46.5 (CH₂, Ind), -3.4 (SiMe₂).

### Beispiel 6

### Herstellung von Fluorenyl-2-indenyl-dimethylsilyzirkondichlorid

Fluorenyl-2-indenyldimethylsilan (1.33 g, 0.004 mol) aus Beispiel 5 wurde in einer Mischung aus 10 ml Tetrahydrofuran und 30 ml Diethylether gelöst und bei -40 °C mit einer 2.5 m Lösung von n-BuLi in Hexan (3.2 ml, 0.008 mol) zur Reaktion gebracht. Man ließ 15 h bei 25 °C rühren. Danach wurden die Lösungsmittel im Ölpumpenvakuum entfernt und der Rückstand mit 20 ml Petrolether gewaschen. In weiteren 20 ml Petrolether wurde das so gereinigte Dilithiumsalz suspendiert. ZrCl₄ (0.815 g, 0.0035 mol) wurde in 20 ml Petrolether suspendiert und zum Dilithiumsalz bei 25 °C zugegeben. Nach 15 h Rühren wurden die Lösungsmittel im Ölpumpenvakuum entfernt und der Rückstand mit 80 ml CH₂Cl₂ extrahiert sowie über Kieselgur von unlöslichen Bestandteilen filtriert. Das CH₂Cl₂ wurde im Ölpumpenvakkum verdampft. Man erhielt 1.90 g der Titelverbindung (95 %) als orangefarbenen Feststoff.
^{**1**}**H NMR (CDCl**_{**3**}**):** δ 8.15 (d, 2 H, ³J_{HH} = 2 Hz, arom. ), 7.70 (d, 2 H, ³J_{HH} = 2 Hz, arom.), 7.6 (m, 2 H, Ind), 7.4-7.1 (m, 6 H, arom), 6.05 (s, 2 H, 2-Ind), 1.21 (s, 6H, SiMe₂).

### Beispiel 7

### Herstellung von {Trimethylsilylcyclopentadienyl}-2-indenyl-dimethylsilan

Chlor-2-indenyldimethylsilan (5.15 g, 0.025 mol) nach Beispiel 1 wurde in 10 ml Tetrahydrofuran gelöst. Es wurde auf 0 °C gekühlt und eine Lösung von Trimethylsilylcyclopentadienyllithium (3.60 g, 0.025 m) in 20 ml Tetrahydrofuran zugegeben. Man ließ 15 h bei 25 °C rühren. Dann wurden 50 ml Wasser zugefügt, die organische Phase nochmals mit Wasser gewaschen und über Na₂SO₄ getrocknet. Nach Entfernen der Lösungsmittel im Ölpumpenvakuum wurde das zurückgebliebene gelbliche Öl mittels Säulenchromatographie gereinigt. Nach Entfernen der Lösungsmittel erhielt man 2.12 g (34%) {Trimethylsilylcyclopentadienyl}-2-indenyl-dimethylsilan als farbloses Öl.
^{**1**}**H NMR (CDCl**_{**3**}**):** δ 7.6 - 7.4 (m, 2 H, arom. H), 7.3 - 7.2 (m, 2 H, arom. H), 7.14 (s, 1 H, Ind), 6.77 (pt, 2 H, ³J = 0.5 Hz, Cp), 6.68 (pt, 2 H, ³J= 0.5 Hz, Cp), 3.42 (s, 2 H, CH₂, Ind) 0.26 (s, 6 H, SiMe₂), -0.06 (s, 9 H, SiMe₃).
^{**13**}**C NMR (CDCl**_{**3**}**):** δ 147.2 (C_{Ind}, [C]), 146.6 (C_{Ind}, [C]), 145.1 (C_{Ind}, [C-Si]), 141.8 (CH=CSi, Ind), 135.7 ( CH, Cp), 130.9 ( CH, Cp), 126.6 (CH, arom., Ind), 124.7 (CH, arom., Ind), 123.4 (CH, arom., Ind), 120.8 (CH, arom., Ind), 43.4 (CH₂, Ind), 39.1 (C=CSi₂, Cp), -0.9(SiMe₃), -1.9 (SiMe₂).

### Beispiel 8

### Herstellung von {Trimethylsilylcyclopentadienyl}-2-indenyl-dimethylsilylzirkondichlorid

{Trimethylsilylcyclopentadienyl}-2-indenyl-dimethylsilan (0.931 g, 0.003 mol) aus Beispiel 7 wurde in 30 ml Diethylether gelöst und bei -40°C mit einer 2.5 in Lösung von n-BuLi in Hexan (2.4 ml, 0.006 mol) zur Reaktion gebracht. Man ließ 15 h bei 25°C rühren. Danach wurden die Lösungsmittel im Ölpumpenvakuum entfernt und der Rückstand mit 20 ml Petrolether gewaschen. In weiteren 20 ml Petrolether wurde das so gereinigte Dilithiumsalz suspendiert. ZrCl₄ (0.815 g, 0.0035 mol) wurde in 40 ml Petrolether ebenfalls suspendiert und zum Dilithiumsalz bei 25°C gegeben. Nach 15 h Rühren wurden die Lösungsmittel im Ölpumpenvakuum entfernt und der Rückstand mit 80 ml Methylenchlorid extrahiert sowie über Kieselgur von unlöslichen Bestandteilen filtriert. Das Methylenchlorid wurde im Ölpumpenvakuum verdampft. Man erhielt 0.747 g der Titelverbindung (53 %) als hellgelben Feststoff. **Schmp.:** 85°C.
^{**1**}**H NMR (CDCl**_{**3**}**):** 7.70 (d, 1 H, ³J_{HH} = 2.0 Hz, Ind.), 7.47 (d, 1 H, ³J_{HH} = 2.0 Hz, Ind.), 7.3 (m, 2 H, Ind), 7.06 (s, 1 H, Ind), 6.33 (pt, 1 H, ³J_{HH} = 0.5 Hz, Cp), 6.17 (pt, 1 H, ³J_{HH} = 0.5 Hz, Cp), 6.15 (pt, 1 H, ³J_{HH} = 0.5, Cp), 6.02 (s, 1 H, Ind), 0.86 (s, 3 H, SiMe), 0.77 (s, 3 H, SiMe), 0.23 (s, 9 H, SiMe₃).
^{**13**}**C NMR (CDCl**_{**3**}**):** δ 150.0 (C), 135.8 (CH), 135.3 (C), 131.4 (C), 126.8 (CH), 126.0 (CH), 125.1 (CH), 125.0 (CH), 122.3 (CH), 116.4 (CH), 112.2 (C), 110.7 (C), 109.6 (CH), 101.7 (CH) -0.39 (SiMe₃)-3.9 (SiMe), -5.9 (SiMe).

### Beispiel 9

### Herstellung von 1-Indenyl-2-indenyl-dimethylsilan

Chlor-2-indenyldimethylsilan (4.95 g, 0.023 mol) nach Beispiel 1 wurde in 20 ml Diethylether gelöst. Es wurde auf 0 °C gekühlt und eine Lösung von Lithiuminden (1.94 g, 0.022 m) in 25 ml Diethylether zugetropft. Man ließ 2 h bei 25 °C rühren und erhitzte anschließend zum Rückfluß. Zur Aufarbeitung wurden 60 ml Wasser zugefügt, die organische Phase nochmals mit Wasser gewaschen und über Na₂SO₄ getrocknet. Nach Entfernen der Lösungsmittel im Ölpumpenvakuum wurde das zurückbleibende hellgelbe Öl mittels Säulenchromatographie gereinigt. Man erhielt 3.23 g (47%) 1-Indenyl-2-indenyl-dimethylsilan als farbloses Öl, welches im Kühlschrank bei 4 °C kristallisierte. **Schmp.:** 45 °C
^{**1**}**H NMR (CDCl**_{**3**}**):** δ 7.9 - 7.8 (m, 2 H, Ind), 7.7 - 7.5 (m, 2 H, Ind), 7.48 (s, 1 H, Ind), 7.35 (d, 1 H, ³J= 2.0 Hz, Ind), 7.03 (d, 1 H, ³J= 2.0 Hz, Ind), 4.06 (s, 1 H, CH), 3.69 (s, 1 H, CH₂), 3.64 (s, 1 H, CH₂), 0.58 (s, 3 H, SiMe₂), 0.52 (s, 3 H, SiMe₂).
^{**13**}**C NMR (CDCl**_{**3**}**):** δ 147.5 (C_{Ind}, [C]), 146.6 (C_{Ind}, [C]), 146.0 (C_{Ind}, [C]), 145.7 (C_{Ind}, [C]), 145.7 (C_{Ind}, [C]), 143.2 (CH=CSi), 136.2 (CH=CSi), 130.2 (CH=CSi), 127.2 (arom. CH, Ind), 125.9 (arom. CH, Ind), 124.6 (arom. CH, Ind), 124.5 (arom. CH, Ind), 124.5 (arom. CH, Ind), 123.7 (arom. CH, Ind), 121.9 (arom. CH, Ind), 121.9 (arom. CH, Ind), 46.5 (CH-Si), -2.9 (SiMe), -3.27 (SiMe).

### Beispiel 10

### Herstellung von 1-Indenyl-2-indenyl-dimethylsilylzirkondichlorid

Die Verbindung 1-Indenyl-2-indenyldimethylsilan (1.0 g, 0.0035 mol) aus Beispiel 9 wurde in einer Mischung aus 5 ml Tetrahydrofuran und 30 ml Diethylether gelöst und bei -40 °C mit einer 2.5 m Lösung von n-BuLi in Hexan (2.8 ml, 0.007 mol) zur Reaktion gebracht. Man ließ 15 h bei 25 °C rühren. Danach wurden die Lösungsmittel im Ölpumpenvakuum entfernt und der Rückstand mit 20 ml Petrolether gewaschen. In weiteren 20 ml Petrolether wurde das so gereinigte Dilithiumsalz suspendiert. ZrCl₄ (0.815 g, 0.0035 mol) wurde in 20 ml Toluol ebenfalls suspendiert und zum Dilithiumsalz bei 25 °C zugegeben. Nach 15 h Rühren wurden die Lösungsmittel im Ölpumpenvakuum entfernt und der Rückstand mit 80 ml CH₂Cl₂ extrahiert sowie über Kieselgur von unlöslichen Bestandteilen filtriert. Das CH₂Cl₂ wurde im Ölpumpenvakuum verdampft. Man erhielt 1.59 g (96%) 1-Indenyl-2-indenyl-dimethylsilylzirkondichlorid als orangefarbenen Feststoff.
^{**1**}**H NMR (CDCl**_{**3**}**):** δ 7.6 - 7.5 (m, 2 H, Ind), 7.4 - 7.3 (m, 2 H, Ind), 7.2 - 7.1 (m, 4 H, Ind), 7.01 (d, 1 H, ³J_{HH} = 0.75 Hz, 1-Ind), 6.20 (d, 1 H, ³J_{HH} = 0.75 Hz, 1-Ind), 6.20 (d, 1 H, ³J_{HH} = 0.75 Hz, 1-Ind), 6.13 (s, 1 H, 2-Ind), 6.10 (s, 1 H, 2-Ind), 1.11 (s, 3H, SiMe), 0.89 (s, 3H, SiMe).
^{**13**}**C NMR (CDCl**_{**3**}**):** δ 135.3 (C), 133.8 (C), 131.3 (C),127.5 (CH), 126.6 (CH), 126.4 (CH), 126.2 (CH), 125.3 (CH), 124.8 (CH), 124.4 (CH), 120.0 (CH), 118.1 (CH), 110.2 (C), 107.1 (CH), 103.8 (CH), 91.78 (C),-2.4 (SiMe), -4.6 (SiMe).

### Beispiel 11

### Herstellung der Katalysatorlösung

18,1 mg (40 µmol) 1-Indenyl-2-indenyl-dimethylsilylzirkondichlorid aus Beispiel 10 wurden in 19 ml Toluol gelöst, mit 1 ml Methylalumoxan (MAO in Toluol von Fa. Witco) versetzt und 20 min bei 20 °C voraktiviert.

### Polymerisation von Ethylen

In einen 1,4-l-Stahl-Autoklaven wurden 500 ml Toluol und 5 ml Methylalumoxan (MAO in Toluol von Fa. Witco) vorgelegt. Diese Lösung wurde auf 40 °C temperiert. Anschließend wurde Ethylen zudosiert, bis der Reaktorinnendruck auf 7 bar anstieg. Durch Zugabe von 0,5 ml der Katalysatorlösung (= 1 µmol 1-Indenyl-2-indenyl-dimethylsilylzirkondichlorid) wurde die Polymerisation gestartet. Nach einer Polymerisationsdauer von 15 min bei 40 °C und 7 bar wurde der Autoklav entspannt, das Polymer abfiltriert, mehrmals mit Methanol gewaschen und 20 h im Vakuum bei 60°C getrocknet. Es wurden 13,2 g Polyethylen erhalten.

### Beispiel 12

### Polymerisation von Propylen

In einen 250 ml Glasreaktor wurden 100 ml Toluol und 5 ml einer 10 %-igen Lösung von Methylalumoxan (MAO in Toluol von Fa. Witco) vorgelegt und auf 40 °C erwärmt. Anschließend wurde mit einem Gaseinleitungsrohr kontinuierlich bei 1,1 bar Druck Propylen in die Lösung eingeleitet. Die Polymerisation wurde durch Zugabe von 5 ml der voraktivierten Katalysatorlösung aus Beispiel 11 (= 10 µmol 1-Indenyl-2-indenyl-dimethylsilylzirkondichlorid) gestartet. Bei einer Temperatur von 40°C und einem Propylendruck von 1,1 bar wurde nach 1 Stunde Polymerisationsdauer eine klare Reaktionslösung erhalten, welche durch Zugabe von 100 ml Methanol abgestoppt wurde. Das ausgefallene elastische Polymer wurde abfiltriert, mit Methanol gewaschen und im Vakuumtrockenschrank getrocknet. Es wurden 12,2 g festes amorphes Polypropylen erhalten.

### Vergleichsbeispiel

Die Polymerisation aus Beispiel 12 wurde wiederholt, mit dem Unterschied, daß anstelle des 1-Indenyl-2-indenyl-dimethylsilylzirkondichlorid als Katalysatorkomponente Dimethylsilyl-bis(1-indenyl)zirkondichlorid als Racemat eingesetzt wurde. Bereits während der Polymerisation fiel das Polypropylen als weißer Niederschlag aus. Man erhielt 13,4 g kristallines Polypropylenpulver mit einem Schmelzpunkt bei 145 °C.

### Beispiel 13

### Herstellung von ^{t}Butylamin- 2-indenyl-dimethylsilan

Chlor-2-indenyldimethylsilan (4.7 g, 0.02 mol) nach Beispiel 1 wurde in 20 ml Diethylether gelöst und zu einer Lösung von ^{t}BuNH₂ (10 ml, 0.2 mol) in 50 ml Diethylether bei 25 °C gegeben. Es bildete sich eine Suspension. Nach 12 h Rühren wurde das Lösungsmittel im Ölpumpenvakuum entfernt und der Rückstand in 40 ml n-Pentan aufgenommen. Ausgefallenes ^{t}BuNH₂·HCl wurde durch Filtration abgetrennt. Nach Entfernen des n-Pentans erhielt man 5.2 g (97%) ^{t}Butylamin-2-indenyl-dimethylsilan als farbloses Öl.
^{**1**}**H NMR (CDCl**_{**3**}**):** δ 7.5 - 7.4 (m, 2 H, Ind), 7.3 - 7.2 (m, 2 H, Ind), 7.18 (s, 1 H, Ind), 3.52 (s, 2 H, CH₂), 1.20 (s, 9 H, C(CH₃)₃) 0.78 (s, breit, NH), 0.32 (s, 6 H, SiMe₂).
^{**13**}**C NMR (CDCl**_{**3**}**):** δ 151.0 (C_{Ind}, [C-Si]), 146.9 (C_{Ind}, [C]), 145.8 (C_{Ind}, [C]), 140.9 (CH=CSi), 126.2 (arom. CH, Ind), 124.7 (arom. CH, Ind), 123.7 (arom. CH, Ind), 120.9 (arom. CH, Ind), 49.5 (C(CH₃)₃), 42.3 (CH₂), 33.7 (C(CH₃)₃), 1.1 (SiMe).

### Beispiel 14

### Herstellung von ^{t}Butylamido-2-indenyl-dimethylsilylzirkondichlorid

^{t}Butylamin 2-indenyl-dimethylsilan (1.5 g, 0.0061 mol) aus Beispiel 13 wurde in 30 ml Diethylether gelöst und bei -30°C mit 5.0 ml einer Lösung von n-BuLi in Hexan (2.5 m) tropfenweise versetzt. Hierbei entstand eine farblose Suspension, welche für 15 h bei 25°C gerührt wurde. Dann wurde der Diethylether im Vakuum verdampft und das zurückbleibende Salz zweimal mit je 30 ml n-Pentan gewaschen und erneut in 20 ml n-Pentan suspendiert. Zu dieser Suspension wurde ZrCl₄ (1.41 g, 0.006 mol) in 40 ml Toluol bei 25°C gegeben. Während der Zugabe von ZrCl₄ färbte sich die Reaktionslösung schnell gelborangefarben. Es wurde 15 h gerührt. Die Aufarbeitung erfolgte durch Entfernung des Lösungsmittels im Ölpumpenvakuum und Extraktion mit 70 ml CH₂Cl₂. Man erhielt 0.72 g (29 %) ^{t}Butylamido-2-indenyl-dimethylsilylzirkondichlorid als gelbes Pulver.
^{**1**}**H NMR (CDCl**_{**3**}**):** δ 7.74-7.71 (dd,³J_{HH} = 1.0 Hz, 1.5 Hz, 2 H, Ind), 7.42-7.39 (dd,³J_{HH} = 1.0 Hz, 1.5 Hz, 2 H, Ind), 6.70 (s, 2 H, Ind), 1.38 (s, 9 H, C(CH₃)₃), 0.67 (s, 6 H, SiMe₂).
^{**13**}**C NMR (CDCl**_{**3**}**):** δ 134.2 (C), 128.1 (CH), 123.4 (CH), 119.7 (CH), 114.6 (C-Si), 65.2 (C(CH₃)₃ ), 32.8 (C(CH₃)₃), 0.85 (Si-CH₃).

### Beispiel 15

### Herstellung der Katalysatorlösung

13,6 mg (33,5 µmol) ^{t}Butylamido-2-indenyl-dimethylsilylzirkondichlorid aus Beispiel 14 wurden in einem Gemisch aus 0,9 ml Trisobutylaluminium und 15,9 ml Hexan gelöst.

### Polymerisation von Ethylen

In einen 1,4-l-Stahl-Autoklaven wurden 500 ml Hexan, 0,1 ml Trisobutylaluminium und 2,5 ml der Katalysatorlösung (= 5 µmol ^{t}Butylamido-2-indenyl-dimethylsilylzirkondichlorid) vorgelegt. Diese Lösung wurde auf 40°C temperiert. Anschließend wurde Ethylen zudosiert, bis der Reaktorinnendruck auf 7 bar anstieg. Durch Zugabe einer Lösung von 4,6 mg (5 µmol) Triphenylmethyl-tetrakis(pentafluorphenyl)borat in 5 ml Toluol wurde die Polymerisation gestartet. Nach einer Polymerisationsdauer von 10 min bei 40°C und 7 bar wurde der Autoklav entspannt, das Polymer abfiltriert, mehrmals mit Methanol gewaschen und 20 h im Vakuum bei 60°C getrocknet. Es wurden 10,1 g Polyethylen erhalten.

### Beispiel 16

### Herstellung der Katalysatorlösung

17,2 mg (42,4 µmol) ^{t}Butylamido-2-indenyl-dimethylsilylzirkondichlorid aus Beispiel 14 wurden in 20,2 ml Toluol gelöst und mit 1 ml einer 10%-igen Lösung von Methylaluminoxan (MAO in Toluol von Fa. Witco) voraktiviert.

### Copolymerisation von Ethylen und Propylen

In einen 250 ml Glasreaktor wurden 100 ml Toluol und 5 ml einer 10 %-igen Lösung von Methylalumoxan (MAO in Toluol von Fa. Witco) vorgelegt. Anschließend wurde bei 20°C mit einem Gaseinleitungsrohr kontinuierlich bei 1,1 bar Druck ein Ethylen/Propylen-Gemisch (Massenverhältnis 1:2) in die Lösung eingeleitet. Die Polymerisation wurde durch Zugabe von 0,5 ml der voraktivierten Katalysatorlösung (= 1 µmol ^{t}Butylamido-2-indenyl-dimethylsilylzirkondichlorid) gestartet. Bei einer Temperatur von 20°C und einem Druck von 1,1 bar wurde nach 1 Stunde Polymerisationsdauer eine klare Reaktionslösung erhalten, welche durch Zugabe von 100 ml Methanol abgestoppt wurde. Das ausgefallene elastische Polymer wurde abfiltriert, mit Methanol gewaschen und im Vakuumtrockenschrank getrocknet. Es wurden 2,3 g amorphes Copolymer erhalten. Die IR-spektroskopische Ermittlung der Zusammensetzung des Copolymeren ergab einen Einbau von 63,7 Gew.-% Ethylen und 36,3 Gew.-% Propylen.

### Beispiel 17

### Herstellung von ^{t}Butylamido- 2-indenyl-dimethylsilyltitaniumdichlorid

^{t}Butylamin-2-indenyl-dimethylsilan (1.0 g, 0.0041 mol) aus Beispiel 13 wurde in 20 ml n-Pentan gelöst und bei 0 °C mit 3.4 ml einer Lösung von n-BuLi in Hexan (2.5 m) tropfenweise versetzt. Hierbei entstand eine Suspension, welche nach 15 stündigem Rühren zu einer harzigen Masse konglomerierte. Das n-Pentan wurde im Vakuum verdampft und das zurückgebliebene gelbliche Pulver bei -78°C in 20 ml Tetrahydrofuran gelöst und zu einer Suspension von TiCl₃ · 3 THF in 10 ml Tetrahydrofuran bei -78 °C mittels Kanüle transferiert. Hierbei wurde eine tiefgelbe Verfärbung beobachtet. Nach Erreichen der Raumtemperatur wurde festes PbCl₂ (1.13 g, 0.0041 mol) zugegeben und 0.5 h gerührt. Die Suspension färbte sich nun rotbraun. Das Lösungsmittel wurde entfernt und das zurückbleibene Pulver dreimal mit je 20 ml Toluol extrahiert. Hierbei wurde nach Versetzen mit Toluol und kurzem Rühren die Suspension absetzen lassen und die darüberstehende Flüssigkeit abpipettiert. Das Toluol wurde nun aus dem Extrakt entfernt und durch n-Pentan ersetzt, wobei 1.06 g (71.9 %) ^{t}Butylamido-2-indenyl-dimethylsilyltitaniumdichlorid als rotbrauner Feststoff anfiel. Durch Kristallisation aus Methylenchlorid bei - 30°C konnten Einkristalle erhalten werden. Es wurde eine Röntgenstrukturanalyse durchgeführt (Fig. 1). **Schmp.:** 143 °C
^{**1**}**H NMR (CDCl**_{**3**}**):** δ, 7.74-7.71 (dd,³J_{HH} = 1.0 Hz, 1.5 Hz, 2 H, Ind), 7.42-7.39 (dd,³J_{HH} = 1.0 Hz, 1.5 Hz, 2 H, Ind), 6.78 (s, 2 H, Ind), 1.41 (s, 9 H, C(CH₃)₃), 0.77 (s, 6 H, SiMe₂).
^{**13**}**C NMR (CDCl**_{**3**}**):** δ, 134.2 (C), 128.1 (CH), 124.4 (CH), 119.7 (CH), 114.6 (C-Si), 65.2 (C(CH₃)₃ ), 32.3 (C(CH₃)₃), 0.0 (Si-CH₃).

### Beispiel 18

### Herstellung der Katalysatorlösung

27 mg (74,5 µmol) ^{t}Butylamido-2-indenyl-dimethylsilyltitaniumdichlorid aus Beispiel 17 wurden in einem Gemisch aus 1,9 ml Triisobutylaluminium und 13 ml Hexan gelöst.

### Polymerisation von Ethylen

Die Polymerisation aus Beispiel 15 wurde mit dem Unterschied wiederholt, daß 5 µmol ^{t}Butylamido-2-indenyl-dimethylsilyltitaniumdichlorid (= 1 ml der Katalysatorlösung) anstelle von ^{t}Butylamido-2-indenyl-dimethylsilylzirkondichlorid als Katalysatorkomponente eingesetzt wurden. Man erhielt 12,1 g Polyethylen.

### Beispiel 19

### Polymerisation von Propylen

In einen 1,4-l-Stahl-Autoklaven wurden 500 ml Hexan, 0,1 ml Tri-isobutyl-aluminium (TIBA) und 1 ml der Katalysatorlösung aus Beispiel 18 (= 5 µmol ^{t}Butylamido-2-indenyl-dimethylsilyl-titaniumdichlorid) vorgelegt. Anschließend wurde der Autoklav mit Propylen befüllt, bis sich ein Druck von 2,0 bar eingestellt hatte. Dann wurde auf 20°C temperiert. Durch Zugabe einer Lösung von 18,5 mg (20 µmol) Triphenylmethyl-tetrakis(pentafluorphenyl)borat in 10 ml Toluol wurde die Polymerisation gestartet. Propylen wurde kontinuierlich zudosiert, so daß der Druck im Autoklaven konstant 2,0 bar betrug. Nach einer Polymerisationsdauer von 50 Minuten bei 20°C wurde die Reaktion mit 500 ml Methanol abgestoppt, das ausgefallene Polymer abfiltriert und 20 h im Vakuum bei 60°C getrocknet. Es wurden 68,9 g ataktisches Polypropylen erhalten. Die GPC-Analyse ergab: M_{w}= 159000 g/mol, M_{w}/ Mₙ = 2,28. Die ¹³C-NMR-spektroskopische Untersuchung ergab folgende Zusammensetzung: % mm = 19,1 (isotaktischer Anteil); %(mr/rm) = 50,8 (ataktischer Anteil); % rr = 30,0 (syndiotaktischer Anteil); entsprechend der DSC-Messung ist das Polymer vollständig amorph. Die Schmelzenthalpie betrug Null J/g. Mit der DSC-Methode wurde eine Tg von -19 °C ermittelt.

### Beispiel 20

### Copolymerisation von Ethylen und Propylen

In einen 1,4-l-Stahl-Autoklaven, der mit einem mechanischen Rührer, Manometer, Temperaturfühler, einer Temperatursteuervorrichtung, einer Katalysatorschleuse und Monomerdosiervorrichtungen für Ethylen und Propylen ausgestattet war, wurden 500 ml Hexan und 0,1 ml TIBA vorgelegt. Hierzu wurde 1 ml der Katalysatorlösung aus Beispiel 19 (= 5 µmol ^{t}Butylamido-2-indenyl-dimethylsilyltitaniumdichlorid) gegeben. Die Innentemperatur wurde mit einem Thermostaten auf 20 °C eingestellt. Anschließend wurden 15 g Ethylen und 90 g Propylen zudosiert. Durch Zugabe einer Lösung von 9,22 mg (10 µmol) Triphenylmethyl-tetrakis(pentafluorphenyl)borat in 5 ml Toluol wurde die Polymerisation gestartet. In Semibatch-Fahrweise wurde Ethylen und Propylen im Massenverhältnis von 15:85 kontinuierlich zudosiert, so daß der Innendruck bei 20°C konstant 5 bar betrug. Nach 30 Minuten Polymerisationsdauer wurde das Polymer mit Methanol ausgefällt, isoliert und 20 h bei 60°C im Vakuum getrocknet, wobei 44 g Copolymer erhalten wurden. Die IR-spektroskopische Ermittlung der Zusammensetzung des Copolymeren ergab einen Einbau von 9,9 Gew.-% Ethylen und 90,1 Gew.-% Propylen. Entsprechend der DSC-Messung ist das Copolymer vollständig amorph. Die Schmelzenthalpie betrug Null J/g. Mit der DSC-Methode wurde eine Tg von -28°C ermittelt.

### Beispiel 21

### Copolymerisation von Ethylen und Propylen

Die Polymerisation aus Beispiel 20 wurde wiederholt mit dem Unterschied, daß 21,3 g Propylen und 22,0 g Ethylen in den Autoklaven vorgelegt wurden und Ethylen und Propylen im Massenverhältnis 50:50 kontinuierlich zudosiert wurden. Die Polymerisationsdauer betrug 70 Minuten. Man erhielt 57,2 g eines amorphen Copolymeren mit einem Gehalt von 49,9 Gew.-% Ethylen und 50,1 Gew.-% Propylen (IR-Spektroskopie). Die Messung der intrinsischen Viskosität ergab einen Wert von 2,59 dl/g. Die Ermittlung des Mooney-Wertes ergab: ML (1+4) 125°C = 112.

### Beispiel 22

### Copolymerisation von Ethylen und Propylen

Die Polymerisation aus Beispiel 20 wurde wiederholt, mit dem Unterschied, daß 35,3 g Propylen und 14,9 g Ethylen in den Autoklaven vorgelegt wurden und Ethylen und Propylen im Massenverhältnis 30:70 kontinuierlich zudosiert wurden. Die Polymerisationsdauer betrug 120 Minuten. Man erhielt 94 g eines amorphen Copolymeren mit einem Gehalt von 27,9 Gew.-% Ethylen und 72,1 Gew.-% Propylen (IR-Spektroskopie). Die Messung der intrinsischen Viskosität ergab einen Wert von 2,50 dl/g. Die Ermittlung des Mooney-Wertes ergab: ML (1+4) 125°C = 107.

### Beispiel 23

### Terpolymerisation von Ethylen, Propylen und 5-Ethyliden-2-norbornen (ENB)

Die Polymerisation aus Beispiel 22 wurde wiederholt, mit dem Unterschied, daß 45,6 g Propylen und 19,8 g Ethylen und 5 ml ENB in den Autoklaven vorgelegt wurden und Ethylen und Propylen im Massenverhältnis 30:70 kontinuierlich zudosiert wurden. Die Polymerisationsdauer betrug 90 Minuten. Man erhielt 80,2 g eines amorphen Terpolymeren mit einem Gehalt von 24,7 Gew.-% Ethylen, 71,6 Gew.-% Propylen und 3,81 Gew.-% ENB (IR-Spektroskopie). Die Messung der intrinsischen Viskosität ergab einen Wert von 2,56 dl/g. Die Ermittlung des Mooney-Wertes ergab: ML (1+4) 125°C = 123. Die DSC-Untersuchung ergab einen Glasübergang Tg = -36°C (Schmelzenthalpie = 0 J/g)

### Beispiel 24

### Terpolymerisation von Ethylen, Propylen und 5-Ethyliden-2-norbornen (ENB)

Die Polymerisation aus Beispiel 22 wurde wiederholt, mit dem Unterschied, daß 21,3 g Propylen, 22,0 g Ethylen und 5 ml ENB in den Autoklaven vorgelegt wurden und Ethylen und Propylen im Massenverhältnis 50:50 kontinuierlich zudosiert wurden. Die Polymerisationsdauer betrug 80 Minuten. Man erhielt 67 g eines amorphen Terpolymeren mit einem Gehalt von 47,3 Gew.-% Ethylen, 48,0 Gew.-% Propylen und 4,9 Gew.-% ENB (IR-Spektroskopie). Die Messung der intrinsischen Viskosität ergab einen Wert von 2,26 dl/g. Die Ermittlung des Mooney-Wertes ergab: ML (1+4) 10°C = 133. Die DSC-Untersuchung ergab einen Glasübergang Tg = -51°C (Schmelzenthalpie = 0 J/g)

### Beispiel 25

### Terpolymerisation von Ethylen, Propylen und 5-Ethyliden-2-norbornen (ENB)

Die Polymerisation aus Beispiel 22 wurde wiederholt, mit dem Unterschied, daß 12,8 g Propylen, 18,6 g Ethylen und 5 ml ENB in den Autoklaven vorgelegt wurden und Ethylen und Propylen im Massenverhältnis 60:40 kontinuierlich zudosiert wurden. Die Polymerisationsdauer betrug 90 Minuten. Man erhielt 56,3 g eines Terpolymeren mit einem Gehalt von 56,6 Gew.-% Ethylen, 37,3 Gew.-% Propylen und 6,5 Gew.-% ENB (IR-Spektroskopie). Die Messung der intrinsischen Viskosität ergab einen Wert von 2,64 dl/g. Die DSC-Untersuchung ergab einen Glasübergang Tg = -47°C (Schmelzenthalpie = 12,6 J/g)

## Patentansprüche

1. Verfahren zur Herstellung von metallorganischen Verbindungen von Übergangsmetallen mit gegebenenfalls tetrahydriertem 2-Indenyl als erstem Liganden der Formel 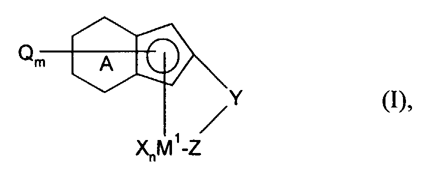 worin
A das Benzosystem oder das Tetrahydrocyclohexylsystem bedeutet,
Q als Substituent des gegebenenfalls tetrahydrierten 2-Indenylsystems C₁-C₄-Alkyl, C₆-C₁₄-Aryl, C₇-C₁₀-Aralkyl, C₁-C₄-Alkoxy, C₁-C₄-Alkylthio, Phenoxy, Phenylthio, Di-C₁-C₄-alkyl-amino, C₆-C₁₄-Aryl-C₁-C₄-alkyl-amino, Di-C₆-C₁₄-aryl-amino, Dibenzylamino, Tri-C₁-C₄-alkyl-silyl, Di-C₁-C₄-alkyl-boranyl, Phenyl-C₁-C₄-alkyl-boranyl, Diphenylboranyl, Di-C₁-C₄-alkyl-phosphoryl, Diphenylphosphoryl oder Phenyl-C₁-C₄-alkyl-phosphoryl bedeutet,
m eine ganze Zahl im Bereich von Null bis Sechs ist,
M¹ ein Übergangsmetall aus der IV., V. oder VI. Nebengruppe des Periodensystems der Elemente (Mendelejew) ist,
X ein Anion bedeutet,
n eine Zahl von Null bis Vier ist, die sich aus der Valenz und dem Bindungszustand von M¹ ergibt,
Y eine Brücke aus der Gruppe von -C(R¹R²)-, -Si(R¹R²)-, -Ge(R¹R²)-, -C(R¹R²)-C(R³R⁴)-, -C(R¹R²)-Si(R³R⁴)- oder -Si(R¹R²)-Si(R³R⁴)-darstellt, worin R¹, R², R³ und R⁴ unabhängig voneinander Wasserstoff, Halogen, geradkettiges oder verzweigtes C₁-C₁₀-Alkyl, C₅-C₈-Cycloalkyl, C₆-C₁₄-Aryl oder C₇-C₁₀-Aralkyl bedeuten, und
Z ein zweiter Ligand aus der Gruppe von offenkettigen und cyclischen, gegebenenfalls anionischen π-Systemen,, -N(R⁵)-, -P(R⁶)-, |N(R⁵R⁷)-, |P(R⁶R⁸)-, -O-, -S-, |OR⁵- oder |SR⁵- ist, wobei der senkrechte Strich links vom Elementsymbol N, P, O bzw. S ein Elektronenpaar bedeutet und die Bindung zwischen Z und M¹ ionischen, kovalenten oder koordinativen Charakter hat und worin R⁵, R⁶, R⁷ und R⁸ unabhängig voneinander den Bedeutungsumfang von R¹ bis R⁴ haben und R⁵ und R⁷ zusätzlich -Si(R¹R²R³) bedeuten können und R⁶ und R⁸ zusätzlich -Si(R¹R²R³), -OR¹, -SR¹ oder -N(R¹R²) bedeuten können,
dadurch gekennzeichnet, daß man ein gegebenenfalls substituiertes 2-Halogen-inden der Formel 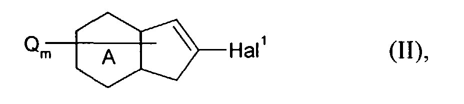 in der Hal¹ für Cl, Br oder I steht und A, Q und m die obige Bedeutung haben bei einer Temperatur von -20°C bis +120°C mit elementarem Mg oder Zn in einer Menge von 1 - 100 g-Atom Mg bzw. Zn pro Mol (II) und nach Abtrennung von nicht umgesetztem Mg bzw. Zn mit einem Dihalogenid der Brücke Y der Formel
Hal²-Y-Hal³ (III),
in der
Hal² und Hal³ unabhängig voneinander Cl, Br oder I bedeuten und
Y den obigen Bedeutungsumfang hat,
in einer Menge von 1 - 20 Mol (III) pro Mol (II) unter Austritt von MgHal¹Hal² bzw. ZnHal¹Hal² umsetzt, wobei in dem Fall, daß Y die Bedeutung -Si(R¹R²)-, -Ge(R¹R²)- oder -Si(R¹R²)-Si(R³R⁴)- hat, die Umsetzung von (II) mit (i) Mg bzw. Zn und (ii) mit (III) auch simultan erfolgen kann, und das Reaktionsprodukt der Formel 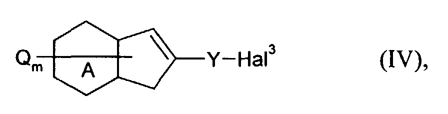 worin A, Q, m, Y und Hal³ die obige Bedeutung haben,
gegebenenfalls nach seiner Isolierung mit einem Z-Derivat der Formel
ZM²ₚ (Va)
oder
ZR⁹ₚ (Vb),
in welcher
M² für Li, Na, K oder -MgHal⁴, worin Hal⁴ den Bedeutungsumfang von Hal² hat, steht,
p die Zahl Eins oder Zwei darstellt,
R⁹ Wasserstoff, -Si(R¹R²R³) oder Sn(R¹R²R³) darstellt und
Z, R¹, R² und R³ die obige Bedeutung haben,
unter Austritt einer Verbindung der Formel
M²Hal³ (VIa)
bzw.
R⁹Hal³ (VIb),
in welcher M², R⁹ und Hal³ die obige Bedeutung haben,
gegebenenfalls in Gegenwart einer Hilfsbase zur 2-Indenyl-Verbindung der Formel 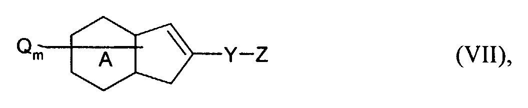 in der A, Q, m, Y und Z die obige Bedeutung haben und die als Dianion vorliegen kann und in der Z weiterhin M², R⁹ oder ein Elektronenpaar tragen kann,
und dann weiter mit einer Übergangsmetallverbindung der Formel
M¹X_{q} (VIII),
umsetzt, in der
M¹ und X die obige Bedeutung haben und
q eine Zahl von Zwei bis Sechs ist, die sich aus der Oxidationsstufe von
M¹ ergibt.

2. Verfahren nach Anspruch 1, dadurch gekennzeichnet, daß Y eine Brücke aus der Gruppe -Si(R¹R²)-, -Ge(R¹R²)- und -Si(R¹R²)-Si(R³R⁴)-, bevorzugt -Si(R¹R²)- ist und die Umsetzung von (II) mit (i) Mg bzw. Zn und (ii) mit (III) zum Reaktionsprodukt simultan erfolgt.

3. Verfahren nach Ansprüchen 1 und 2, dadurch gekennzeichnet, daß M¹ ein Übergangsmetall aus der Gruppe Ti, Zr, Hf, V, Nb, bevorzugt von Ti, Zr, Hf, besonders bevorzugt von Ti, Zr ist.

4. Verfahren nach Ansprüchen 1 bis 3, dadurch gekennzeichnet, daß 1 bis 10 g-Atom Mg bzw. Zn pro Mol (II) und 1 - 10 Mol (III) pro Mol (II) eingesetzt werden.

5. Metallorganische Verbindungen von Übergangsmetallen mit gegebenenfalls substituiertem 2-Indenyl als erstem Liganden der Formel 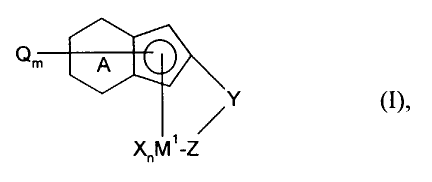 worin
A das Benzosystem oder das Tetrahydrocyclohexylsystem bedeutet,
Q als Substituent des gegebenenfalls tetrahydrierten 2-Indenylsystems C₁-C₄-Alkyl, C₆-C₁₄-Aryl, C₇-C₁₀-Aralkyl, C₁-C₄-Alkoxy, C₁-C₄-Alkylthio, Phenoxy, Phenylthio, Di-C₁-C₄-alkyl-amino, C₆-C₁₄-Aryl-C₁-C₄-alkyl-amino, Di-C₆-C₁₄-aryl-amino, Dibenzylamino, Tri-C₁-C₄-alkyl-silyl, Di-C₁-C₄-alkyl-boranyl, Phenyl-C₁-C₄-alkyl-boranyl, Diphenylboranyl, Di-C₁-C₄-alkyl-phosphoryl, Diphenylphosphoryl oder Phenyl-C₁-C₄-alkyl-phosphoryl bedeutet,
m eine ganze Zahl im Bereich von Null bis Sechs ist,
M¹ ein Übergangsmetall aus der IV., V. oder VI. Nebengruppe des Periodensystems der Elemente (Mendelejew) ist,
X ein Anion bedeutet,
n eine Zahl von Null bis Vier ist, die sich aus der Valenz und dem Bindungszustand von M¹ ergibt,
Y eine Brücke aus der Gruppe von -C(R¹R²)-, -Si(R¹R²)-, -Ge(R¹R²)-, -C(R¹R²)-C(R³R⁴)-, -C(R¹R²)-Si(R³R⁴)- oder -Si(R¹R²)-Si(R³R⁴)-darstellt, worin R¹, R², R³ und R⁴ unabhängig voneinander Wasserstoff, Halogen, geradkettiges oder verzweigtes C₁-C₁₀-Alkyl, C₅-C₈-Cycloalkyl, C₆-C₁₄-Aryl oder C₇-C₁₀-Aralkyl bedeuten, und
Z ein zweiter Ligand aus der Gruppe von offenkettigen und cyclischen, gegebenenfalls anionischen π-Systemen, -N(R⁵)-, -P(R⁶)-, |N(R⁵R⁷)-, |P(R⁶R⁸)-, -O-, -S-, |OR⁵- oder |SR⁵- ist, wobei der senkrechte Strich links vom Elementsymbol H, P, O bzw. S ein Elektronenpaar bedeutet und die Bindung zwischen Z und M¹ ionischen, kovalenten oder koordinativen Charakter hat und worin R⁵, R⁶, R⁷ und R⁸ unabhängig voneinander den Bedeutungsumfang von R¹ bis R⁴ haben und R⁵ und R⁷ zusätzlich -Si(R¹R²R³) bedeuten können und R⁶ und R⁸ zusätzlich -Si(R¹R²R³), -OR¹, -SR¹ oder -N(R¹R²) bedeuten können, wobei die Verbindungen Ethylen-bis(2-indenyl)-titandichlorid, Dimethylsilyl-(1-indenyl)(2-indenyl)-bis-dimethylamino-hafnium, Dimethylsilyl-(1-indenyl)(2-indenyl)-dimethylhafnium, Dimethyl-bis(2-indenyl)-silan-zirkoniumdichlorid, 1-Cyclopentadienyl-2-(2-indenyl)-ethan-zirkoniumchlorid, Bis-(2-indenyl)-methan-zirkoniumdichlorid, Ethylen-1-(3-but-3-enyl)inden-1-yl)-2-((1-but-3-enyl)-inden-2-yl)zirkoniumdichlorid und Ethylen-1-((3-allyldimethylsilyl)-inden-1-yl)2-((1-allyldimethylsilyl)-inden-2-yl)zirkoniumdichlorid ausgenommen sind.

6. Nicht C2-symmetrische metallorganische Verbindungen von Übergangsmetallen nach Anspruch 5, worin in Formel (I) an die Stelle von Z der zweite Ligand Z 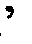 tritt, der die Bedeutung substituiertes oder nicht substituiertes Cyclopentadien, substituiertes oder nicht substituiertes 1-Inden, nicht substituiertes 2-Inden, substituiertes oder nicht substituiertes Fluoren, -N(R⁵)-, -P(R⁶)-, |N(R⁵R⁷)-, |P(R⁶R⁸)-, -O-, -S-, |OR⁵- oder |SR⁵- hat, worin R⁵ bis R⁸ und die senkrechten Striche die in Anspruch 5 genannte Bedeutung haben und wobei die Verbindungen Ethylen-bis(2-indenyl)-titandichlorid, Dimethylsilyl-(1-indenyl)(2-indenyl)-bis-dimethylamino-hafnium, Dimethylsilyl-(1-indenyl)(2-indenyl)-dimethylhafnium, Dimethyl-bis(2-indenyl)-silan-zirkoniumdichlorid, 1-Cyclopentadienyl-2-(2-indenyl)-ethan-zirkoniumchlorid, Bis-(2-indenyl)-methan-zirkoniumdichlorid, Ethylen-1-(3-but-3-enyl)inden-1-yl)-2-((1 -but-3-enyl)-inden-2-yl)zirkoniumdichlorid und Ethylen-1-((3-allyldimethylsilyl)-inden-1-yl)-2-((1-allyldimethylsilyl)-inden-2-yl)zirkoniumdichlorid ausgenommen sind.

7. Nicht C2-symmetrische metallorganische Verbindungen von Übergangsmetallen nach Anspruch 6, worin in Formel (I) an die Stelle von Z' der zweite Ligand Z'' tritt, der die Bedeutung substituiertes oder nicht substituiertes 1-Indenyl, substituiertes oder nicht substituiertes Fluorenyl, substituiertes oder nicht substituiertes Cyclopentadienyl, -N(R⁵)- oder |N(R⁵R⁷)- hat, wobei bevorzugt in Formel (I) weiterhin Y = -Si(R¹R²)- und M¹ = Ti oder Zr bedeuten, wobei R¹, R², R⁵ und R⁷ sowie der senkrechte Strich neben dem Elementsymbol H die in Anspruch 5 genannte Bedeutung haben und wobei die Verbindungen Ethylen-bis(2-indenyl)-titandichlorid, Dimethylsilyl(1-indenyl)(2-indenyl)-bis-dimethylamino-hafnium, Dimethylsilyl-(1-indenyl)(2-indenyl)-dimethylhafnium, Dimethyl-bis-(2-indenyl)-silan-zirkoniumdichlorid, 1-Cyclopentadienyl-2-(2-indenyl)-ethan-zirkoniumchlorid, Bis-(2-indenyl)-methan-zirkoniumdichlorid, Ethylen-1-(3-but-3-enyl)inden-1-yl)-2-((1-but-3-enyl)-inden-2-yl)zirkoniumdichlorid und Ethylen-1-((3-allyldimethylsilyl)-inden-1-yl)-2-((1-allyldimethylsilyl)-inden-2-yl)zirkoniumdichlorid ausgenommen sind.

8. Tert.-Butylamido-2-indenyl-dimethylsilyl-titandichlorid.

9. Zwischenprodukte der Formel 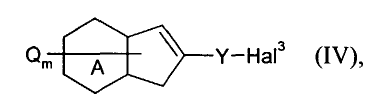 in der
A, Q, m, Y und Hal³ die in Anspruch 1 genannte Bedeutung haben.

10. Verfahren zur Herstellung von Zwischenprodukten der Formel 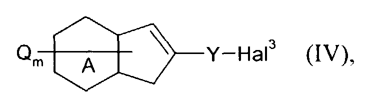 in der
A, Q, m, Y und Hal³ die in Anspruch 1 genannte Bedeutung haben,
dadurch gekennzeichnet, daß man ein gegebenenfalls substituiertes 2-Halogen-inden der Formel 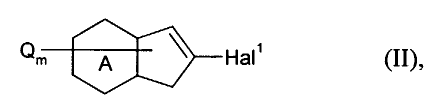 in der
Hal¹, A, Q und m die in Anspruch 1 genannte Bedeutung haben,
bei einer Temperatur von -20°C bis +120°C und elementarem Mg oder Zn in einer Menge von 1 bis 100 g-Atom Mg bzw. Zn pro Mol (II) und nach Abtrennung von nicht umgesetztem Mg bzw. Zn mit einem Dihalogenid der Formel
Hal²-Y-Hal³ (III),
in der
Y, Hal² und Hal³ die in Anspruch 1 genannte Bedeutung haben,
in einer Menge von 1 bis 20 Mol (III) pro Mol (II) unter Austritt von MgHal¹Hal² bzw. ZnHal¹Hal² umsetzt, wobei in dem Fall, daß Y die Bedeutung -Si(R¹R²)-, -Ge(R¹R²)- oder -Si(R¹R²)-Si(R³R⁴)- hat, die Umsetzung von (II) mit (i) Mg bzw. Zn und (ii) mit (III) auch simultan erfolgen kann.

11. Verwendung der Verbindungen nach Anspruch 6 als Katalysatoren zur Polymerisation von Monomeren aus der Gruppe von C₂-C₆-α-Olefinen, C₄-C₆-Diolefinen und Cyclo(di)olefinen oder zur Copolymerisation mehrerer der genannten Monomeren.

12. Verwendung nach Anspruch 11 zur Herstellung amorpher, weitgehend ataktischer Polymerer.

13. Verwendung nach Anspruch 11 zur Herstellung von EPDM-Kautschuken.
